# EUROPÄISCHE PATENTSCHRIFT

(11) **EP 1 143 224 B1**
(45) Veröffentlichungstag und Bekanntmachung des Hinweises auf die Patenterteilung: **09.08.2006**
(21) Anmeldenummer: 01107984.5
(22) Anmeldetag: 29.03.2001
(51) Int. Cl.: G01C 21/34, G08G 1/0968

(54) **Verfahren zur Routenberechnung in einem Navigationsgerät**
Method of calculating a route in a navigation device
Méthode pour calculer une route dans un dispositif de navigation

(30) Priorität: 07.04.2000 DE 10017427
(43) Veröffentlichungstag der Anmeldung: 10.10.2001
(73) Patentinhaber: ROBERT BOSCH GMBH, 70442 Stuttgart (DE)
(72) Erfinder: Rychlak, Stefan, 31241 Ilsede (DE)

(56) Entgegenhaltungen:
- WO-A-93/09511
- WO-A-99/14701
- US-A- 5 184 303

## Beschreibung

### Stand der Technik

Die Erfindung geht von einem Verfahren zur Routenberechnung in einem Navigationsgerät, bei dem eine Fahrtroute von einem Ausgangs- oder aktuellen Standort zu einem Zielort unter Zuhilfenahme von Wegeinformationen bestimmt wird,
und ein über eine aus mindestens einer bestimmten Eigenschaft verfügender Wegeabschnitt bei der Bestimmung der Fahrtroute nicht berücksichtigt wird, nach der Gattung des unabhängigen Patentanspruchs aus.

In der nicht vorveröffentlichten Patentanmeldung DE 198 59 078.4 ist ein Verfahren zur Routenberechnung beschrieben, bei dem über vorgegebene Eigenschaften verfügende Streckenabschnitte, wie beispielsweise gesperrte, mautpflichtige oder durch einen Verkehrsstau betroffene Streckenabschnitte, für eine Routenberechnung nicht berücksichtigt werden. Das vorgeschlagene Verfahren geht davon aus, daß Informationen über bestimmte Streckenabschnitte betreffende vorgegebene Eigenschaften entweder bereits in der Routenberechnung zugrundegelegten Wegeinformationen, wie gespeicherten Kartendaten, vermerkt oder, beispielsweise im Falle von Verkehrsstauungen, dem Navigationsgerät über eine Funkschnittstelle mitgeteilt werden. Über die Funkschnittstelle, beispielsweise einen zum Empfang von Verkehrsinformationen geeigneten Rundfunkempfänger, werden gewöhnlich nur höherwertige Verkehrswege, wie Autobahnen oder allenfalls besonders wichtige Bundesstraßen betreffende Einschränkungen mitgeteilt. Auch sind insbesondere zeitlich beschränkte, Verkehrswege betreffende Einschränkungen in der Regel nicht in gespeicherten Kartendaten enthalten. Daher ist die Berücksichtigung insbesondere temporärer und niederrangige Verkehrswege betreffender Einschränkungen mit dem vorgeschlagenen Verfahren nicht möglich.

WO-A-99 14701 offenbart ein Fahrzeugnavigationssystem, das eine Fahrroute von einem Start- zu einem vom Benutzer vorgegebenen Zielort auf der Grundlage von Kartendaten berechnet, wobei die Kartendaten Streckenabschnitte und den Streckenabschnitten zugeordnete Gewichte umfassen. Die Gewichte repräsentieren dabei Durchfahrtszeiten für die zugehörigen Streckenabschnitte. Es ist eine Eingriffsmöglichkeit des Benutzers derart vorgesehen, dass dieser Gewichte einzelner Streckenabschnitte verändern kann. Somit können einzelne Streckenabschnitte vollständig von der Routenberechnung ausgenommen werden, indem ihnen ein sehr hohes Gewicht zugeordnet wird. Durch die Beeinflussung der Gewichte können beispielsweise dem Benutzer bekannte Verkehrsstörungen berücksichtigen kann. Daneben können auch über Rundfunk empfangene Verkehrsstörungsinformationen automatisch durch Beeinflussung der Gewichte berücksichtigt werden.

### Vorteile der Erfindung

Das erfindungsgemäße Verfahren zur Routenberechnung mit den Merkmalen des unabhängigen Patentanspruchs, bei dem nämlich ein über eine aus mindestens einer bestimmten Eigenschaft verfügender Wegeabschnitt bei der Bestimmung der Fahrtroute nicht berücksichtigt wird, wobei die bestimmte Eigenschaft dem Wegeabschnitt durch den Benutzer zuordenbar ist, ermöglicht demgegenüber eine Berücksichtigung auch solcher Wegeinformationen betreffender Eigenschaften, die weder in Kartendaten gespeichert, noch über eine Funkschnittstelle mitgeteilt werden.

Im Falle von vor der Routenberechnung nicht bekannten Straßensperrungen ermöglicht das erfindungsgemäße Verfahren auch während eines Zielführungsvorgangs die Markierung der gesperrten Straße als nicht passierbar und das automatische Auffinden einer günstigsten Umfahrung der gesperrten Straße. Besonders vorteilhaft ist dabei die Möglichkeit der Zuordnung von Dauern zu bestimmten Wegeabschnitten zugeordneten Eigenschaften. Sind die Dauern von Verkehrswege betreffenden Beschränkungen, beispielsweise durch eine Beschilderung, bekannt, können betroffene Wegeabschnitte für nachfolgende Routenberechnungen für die tatsächliche Dauer der Beschränkung unberücksichtigt bleiben. Durch Festlegung beliebig langer Dauern ermöglicht das erfindungsgemäße Verfahren dem Benutzer weiterhin eine Manipulation der einer Routenberechnung zugrundeliegenden Wegeinformationen, beispielsweise eine Aktualisierung veralteter Wegeinformationen oder eine Anpassung der Wegeinformationen an persönliche Vorlieben.

### Zeichnungen

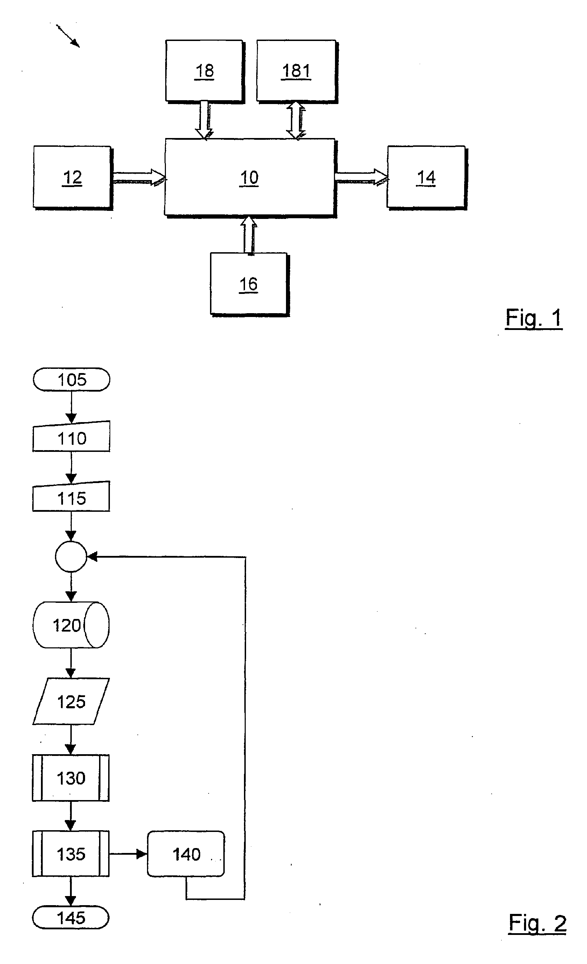

Ausführungsbeispiele der Erfindung sind in den Figuren dargestellt und werden nachfolgend näher erläutert.
Es zeigen Figur 1 ein Blockschaltbild des erfindungswesentlichen Teils eines Navigationsgeräts zur Durchführung des erfindungsgemäßen Verfahrens zur Routenberechnung und
Figur 2 einen Ablaufplan des erfindungswesentlichen Teils des erfindungsgemäßen Verfahrens.

### Beschreibung der Ausführungsbeispiele

Das in Figur 1 dargestellte Navigationsgerät 1 zur Durchführung des erfindungsgemäßen Verfahrens zur Routenberechnung verfügt über eine Steuerung 10, die vorzugsweise als programmgesteuerter Mikroprozessor ausgeführt ist. Die von der Steuerung 10 zu erfüllenden Aufgaben und Funktionen sind als Bestandteile des Betriebsprogramms des Geräts realisiert.

An die Steuerung 10 ist eine Sensorik 12 zur Erzeugung von zur Bestimmung eines aktuellen Fahrzeugstandorts geeigneten Signalen angeschlossen. Diese umfaßt beispielsweise einen Entfernungsmesser zur Bestimmung einer zurückgelegten Wegstrecke und einen Drehratensensor zur Bestimmung einer Fahrtrichtungsänderung, wobei die Signale der genannten Sensoren zur Ermittlung einer auf einen Startpunkt bezogenen relativen Positionsinformation dienen, sowie einen GPS-Empfänger zur Auswertung von Satellitensignalen zur Gewinnung einer absoluten Positionsinformation.

An die Steuerung 10 ist weiterhin eine Ausgabeeinheit 14 zur Ausgabe von Fahrtrichtungshinweisen zur Führung eines Fahrzeugführers entlang einer berechneten Fahrtroute angeschlossen. Diese kann zur Ausgabe von optischen Informationen, etwa in Form eines Richtungspfeils und einer Restentfernungsanzeige bis zu einem bevorstehenden Abbiegevorgang, und/oder akustischen Informationen, etwas in der Form "nach 100 Metern rechts abbiegen", ausgelegt sein.

Weiterhin ist an die Steuerung 10 ist eine Eingabeeinheit 16, beispielsweise zur Eingabe eines Navigationsziels durch buchstabenweise Eingabe des Zielortnamens und erforderlichenfalls ergänzender Informationen, angeschlossen. Die Eingabeeinheit dient darüber hinaus der Vorgabe bestimmter Eigenschaften, wie etwa Straßensperrungen infolge Baustellen, Veranstaltungen oder Verkehrsunfällen, zu durch den Benutzer auswählbaren Wegeabschnitten, sowie der Vorgabe von zeitlichen Dauern für die die ausgewählten Wegeabschnitte betreffenden Eigenschaften.

An die Steuerung 10 ist weiterhin ein Massenspeicher 18 zur Bevorratung von Wegeinformationen angeschlossen, der beispielsweise in Form eines CD-ROM-Lesegeräts ausgeführt ist, in das eine Wegeinformationen, also Kartendaten enthaltende CD-ROM eingelegt ist.

Schließlich ist an die Steuerung 10 ein weiterer Speicher 181 mit wahlweisem Lese- und Schreibzugriff angeschlossen, in dem die vom Benutzer vorgegebenen, bestimmte Wegeabschnitte betreffenden Eigenschaften zusammen mit den zeitlichen Dauern der Eigenschaften den betroffenen Wegeabschnitten zugeordnet speicherbar sind.

Die Steuerung 10 erfüllt unter anderem die Aufgaben
- Bestimmung eines aktuellen Fahrzeugstandorts aus Signalen der Sensorik 12, wobei die relativen Positionsdaten und die absoluten Positionsdaten vorzugsweise zu einer Koppelposition verknüpft und diese mit im Speicher 18 abgelegten Kartendaten im Sinne einer Plausibilitätsprüfung abgeglichen und erforderlichenfalls korrigiert wird,
- Steuerung der Eingabe eines Navigationsziels durch den Benutzer über die Eingabeeinheit 14,
- Steuerung der Eingabe von Wegabschnitte betreffenden Eigenschaften durch den Benutzer, insbesondere von Wegabschnitten betreffenden Beschränkungen, wie Straßensperrungen, Baustellen usw., sowohl vor Beginn, als auch während der Fahrzielführung,
- Berechnung einer Fahrtroute vom aktuellen Fahrzeugstandort zum vorgegebenen Navigationsziel unter Verwendung der im Massenspeicher 18 gespeicherten Wegeinformationen und unter zusätzlicher vorrangiger Berücksichtigung im weiteren Speicher 181 in Form vorgegebener Eigenschaften enthaltener Wegebeschränkungen, wie zum Beispiel Straßensperrungen,
- Führung des Fahrzeugführers entlang der berechneten Fahrtroute durch Erzeugen von Fahranweisungen kurz vor Erreichen von Abbiege- oder sonstigen markanten Punkten,
- Abgleich der aktuellen Fahrzeugposition mit der berechneten Fahrtroute und gegebenenfalls Neuberechnung der Fahrtroute nach Abweichung der Fahrzeugposition von der berechneten Fahrtroute.

Der Ablauf des erfindungsgemäßen Verfahrens wird nachfolgend anhand des in Figur 2 dargestellten Ablaufplans erläutert.

Der Ablauf beginnt mit Inbetriebnahme des Navigationsgeräts 1 (Schritt 105). Nach Inbetriebnahme des Geräts wird der Benutzer, im Falle eines in einem Fahrzeug betriebenen Navigationsgeräts der Fahrzeugführer, zur Eingabe eines Navigationsziels, zu dem der Benutzer durch das Navigationsgerät geführt werden soll, aufgefordert. Die Eingabe des Navigationsziels erfolgt vorzugsweise durch Eingabe des Ortsnamens des Navigationsziels und gegebenenfalls durch Eingabe ergänzender Informationen, wie eines Straßennamens und einer Hausnummer oder Straßenkreuzung zur näheren Bestimmung des Navigationsziels (Schritt 110). Die Eingabe des Zielorts- und gegebenenfalls Straßennamens erfolgt vorzugsweise über die Eingabeeinheit 16 des Navigationsgeräts 1 durch buchstabenweise Eingabe, beispielsweise durch Anwahl eines Buchstabens aus einem Alphabet mittels einer Cursorsteuerung und durch Auswahl des angewählten Buchstabens mittels einer Bestätigungstaste und durch entsprechende Eingabe weiterer Buchstaben des Zielorts- und gegebenenfalls Straßennamens.

In Schritt 115 ist durch eine Benutzereingabe bestimmten Wegeabschnitten mindestens eine Eigenschaft zuordenbar, die einer Berücksichtigung der bestimmten Wegeabschnitte für die Routenberechnung vom aktuellen Stand- zum eingegebenen Zielort entgegensteht. Bei der mindestens einen Eigenschaft kann es sich um eine vollständige oder zeitweise Straßensperrung, beispielsweise infolge einer Baustelle, einer Veranstaltung oder eines Verkehrsunfalls, um eine erhöhte Durchfahrtdauer oder stark verminderte Durchschnittsgeschwindigkeit, beispielsweise infolge einer Straßensperrung einer Richtungsfahrbahn im Falle einer zweispurigen Straße mit Ampelregelung, handeln, wobei diese Aufzählung nicht abschließend ist. Weiterhin ist der durch den Benutzer einem Wegeabschnitt zugeordneten Eigenschaft eine Dauer der Eigenschaft, nämlich beispielsweise die Dauer einer eine Straßensperrung erfordernden Veranstaltung, zuordenbar.

Die mindestens eine einem oder mehreren Wegeabschnitten durch den Benutzer zugeordnete Eigenschaft, sowie die gegebenenfalls der mindestens einen Eigenschaft zugeordnete Dauer der Eigenschaft, im Falle mehrerer Eigenschaften mehrere Dauern, werden im weiteren Speicher 181 abgelegt (Schritt 120). Zusammen mit der Eigenschaft oder den Eigenschaften wird jeweils ein Verweis auf den betroffenen Wegeabschnitt im Massenspeicher 18 abgelegt, der eine Zuordnung der jeweiligen Eigenschaft zu dem betroffenen Wegeabschnitt oder den betroffenen Wegeabschnitten ermöglicht.

Nach Ablauf der Dauer einer einem Wegeabschnitt zugeordneten Eigenschaft wird diese ohne Zutun des Benutzers automatisch aus dem weiteren Speicher 181 gelöscht. Gemäß einer vorteilhaften Ausführungsform der Erfindung ist vorgesehen, daß der Benutzer über den Ablauf der Dauer einer vorgegebenen Eigenschaft vor dem automatischen Löschen der Eigenschaft informiert wird. Der Benutzer kann dann, beispielsweise in dem Fall, daß ihm die genaue Dauer der Eigenschaft nicht bekannt ist, er jedoch festgestellt, daß die Eigenschaft über die von ihm vorgegebene Dauer andauert, die Dauer der Eigenschaft verlängern.

Zur Bestimmung der Fahrtroute von einem aktuellen Standort, beispielsweise dem aktuellen Standort eines Fahrzeugs, in dem das Navigationsgerät betrieben wird, liest die Steuerung 10 die Informationen der Sensorik 12 ein (Schritt 125) und ermittelt daraus den aktuellen Standort.

Die Standortbestimmung (Schritt 130) erfolgt vorzugsweise durch Verknüpfung der relativen und der absoluten Positionsinformationen zu einer Koppelposition und durch Abgleich dieser Koppelposition mit im Massenspeicher 18 gespeicherten Karteninformationen im Sinne einer Plausibilitätsprüfung und gegebenenfalls durch Verschiebung der Koppelposition auf eine plausibelste Position, beispielsweise unter zusätzlicher Berücksichtigung einer aktuellen Fahrtrichtung, die mit einem bestimmten Straßenverlauf korreliert. Alternativ können auch die relativen und absoluten Positionsinformationen jeweils für sich mit den Karteninformationen abgeglichen und anschließend miteinander zu einer korrigierten Koppelpositionsinformation verknüpft werden.

Ausgehend vom ermittelten aktuellen Standort wird auf Grundlage der im Massenspeicher 18 als Teil der Kartendaten gespeicherten Wegeinformationen unter gleichzeitiger Berücksichtigung im weiteren Speicher 181 abgelegter, bestimmte Wegeabschnitte betreffender vorgegebener Eigenschaften, eine Fahrtroute zum durch den Benutzer eingegebenen Navigationsziel berechnet (Schritt 130). Die Fahrtroutenberechnung erfolgt vorzugsweise unter Berücksichtigung der Randbedingung einer minimalen Streckenlänge oder einer minimalen Fahrtdauer, wobei für die Fahrtdaueroptimierung vorzugsweise den Wegeabschnitten zugeordnete Durchschnittsgeschwindigkeitswerte zugrundegelegt werden. Eine Streckenlängenminimierung wird dabei durch Sperrungen als vorgegebene Eigenschaft bestimmter Wegeabschnitte beeinflußt, eine Fahrtdaueroptimierung sowohl durch Sperrungen, als auch durch veränderte Durchschnittsgeschwindigkeitswerte als vorgegebener Eigenschaft, beispielsweise im Falle wechselnden Einbahnverkehrs auf einseitig gesperrten Straßenabschnitten.

Aufgrund der berechneten Fahrtroute vom aktuellen Standort zum vorgegebenen Navigationsziel erfolgt die eigentliche Zielführung (Schritt 135). Diese umfaßt die Ausgabe von Fahranweisungen über die Ausgabeeinheit 14 zur Führung des Fahrzeugführers entlang der berechneten Fahrtroute. Die Fahranweisungen werden vorzugsweise akustisch, beispielsweise in der Form "nach 100 Metern rechts abbiegen", und/oder optisch, beispielsweise in Form einer Richtungspfeils mit einer Restentfernungsanzeige bis zum nächsten Abbiegepunkt, ausgegeben. Wird aufgrund eines Vergleichs der von der Sensorik 12 bereitgestellten Positionsinformationen mit der berechneten Fahrtroute eine Abweichung von der Fahrtroute festgestellt, erfolgt eine erneute Routenberechnung vom nun aktuellen Fahrzeugstandort zum vorgegebenen Navigationsziel, wie im Zusammenhang mit Schritt 130 beschrieben. Der Ablauf endet mit Erreichen des Navigationsziels, also mit Ende des eigentlichen Zielführungsvorgangs (Schritt 135).

Auch während des eigentlichen Zielführungsvorgangs ist die Eingabe von Eigenschaften für bestimmte Wegeabschnitte, sowie die Eingabe von Dauern für eingegebene Eigenschaften möglich (Schritt 140). Wird während des Zielführungsvorgangs von dieser Eingabemöglichkeit Gebrauch gemacht, geht der Ablauf zu Schritt 120 über, wo die Eingaben im weiteren Speicher abgelegt werden und anschließend aufgrund der aktuellen Fahrzeugposition eine neue Fahrtroute, nun unter Berücksichtigung der neu eingegebenen, bestimmte Wegeabschnitte betreffenden Eigenschaften, erfolgt (Schritt 130).

Diese zusätzliche Möglichkeit der Vorgabe von bestimmte Wegeabschnitte betreffenden Eigenschaften während des Zielführungsvorgangs ermöglicht dem Benutzer beim Antreffen beispielsweise einer gesperrten Straße im Laufe eines Zielführungsvorgangs, die Straßensperrung für die aktuelle Zielführung im Rahmen einer neuen Routenberechnung zu berücksichtigen. Dies ist beispielsweise in der nachfolgend beschriebenen Situation von besonderer Bedeutung.

Wird ein Fahrzeugführer während einer Fahrt durch das Navigationsgerät angeleitet, eine Straße zu befahren, die aufgrund einer Baustelle oder eines sonstigen Ereignisses gesperrt ist, und folgt der Fahrzeugführer aufgrund der Straßensperrung dieser Fahranweisung nicht, ist weiterhin eine mögliche Alternative mit einem erheblichen Umweg oder zeitlichen Zusatzaufwand verbunden, so erzeugen Navigationsgeräte gemäß dem Stand der Technik einen Wendebefehl und eine erneute Fahranweisung zum Befahren der gesperrten Straße. Eine Routenberechnung unter Berücksichtigung der Straßensperrung ist ebenso wie das Auffinden einer günstigsten Alternativroute zu der gesperrten Straße nicht möglich. Der Fahrzeugführer erhält somit keine Fahranweisungen zur günstigsten Umfahrung der gesperrten Straße.

Erfindungsgemäß kann der Fahrzeugführer nun der gesperrten Straße die Eigenschaft "gesperrter Wegeabschnitt" zuordnen, so daß bei einer nachfolgenden Routenberechnung vom dann aktuellen Standort zum eingegebenen Navigationsziel die gesperrte Straße nicht mehr berücksichtigt und somit eine unter dem Gesichtspunkt kürzeste Fahrstrecke oder minimale Fahrzeit günstigste Umfahrung in die Routenberechnung einbezogen wird. Somit wird der Fahrzeugführer nach Zuordnung der Eigenschaft "gesperrter Wegeabschnitt" zu der gesperrt angetroffenen Straße über die kürzest- oder schnellstmögliche Fahrtroute zum ursprünglich eingegebenen Navigationsziel geleitet.

Weiter kann das erfindungsgemäße Verfahren auch zur Aktualisierung der im Massenspeicher 18 abgelegten Karten- und Wegeinformationen im Falle stillgelegter Wegeabschnitte verwendet werden. Hierzu ist den betroffenen Wegeabschnitten die Eigenschaft "gesperrter Wegeabschnitt" und eine unendliche oder die Lebenserwartung des Geräts übertreffende Dauer zuzuordnen.

Gemäß einer Weiterbildung der Erfindung kann auch vorgesehen sein, daß beispielsweise früheren Feld- und Waldwegen, die zu Straßen ausgebaut wurden, eine die entsprechende Straßenklasse anzeigende Eigenschaft zugeordnet und der Feld- oder Waldweg damit für nachfolgende Routenberechnungen umdefiniert wird.

## Patentansprüche

1. Verfahren zur Routenberechnung in einem Navigationsgerät,
wobei eine Fahrtroute von einem Ausgangs- oder aktuellen Standort zu einem Zielort unter Zuhilfenahme von Wegeinformationen bestimmt wird,
und wobei ein über mindestens einer bestimmten Eigenschaft verfügender Wegeabschnitt bei der Bestimmung der Fahrtroute nicht berücksichtigt wird,
und wobei die bestimmte Eigenschaft dem Wegeabschnitt durch den Benutzter zugeordnet wird,
**dadurch gekennzeichnet,**
**dass** der vorgebbaren Eigenschaft eine Dauer zugeordnet wird, während derer die vorgebbare Eigenschaft dem Wegeabschnitt zugeordnet bleibt.

2. Verfahren nach Anspruch 1, **dadurch gekennzeichnet, dass** einem Wegeabschnitt mehr als eine Eigenschaft zugeordnet wird.

3. Verfahren nach Anspruch 1, **dadurch gekennzeichnet, dass** einem Wegeabschnitt mehr als eine Eigenschaft und jeder Eigenschaft eine Dauer zugeordnet wird

## Claims

1. Method of calculating a route in a navigation device, a route being determined from a starting location or current location to a destination using route information, a section of a route which has at least one specific property not being taken into account in the determination of the route, and the specific property being assigned to the section of the route by the user, **characterized in that** the predefinable property is assigned a period of time during which the predefinable property remains assigned to the section of the route.

2. Method according to Claim 1, **characterized in that** more than one property is assigned to a section of a route.

3. Method according to Claim 1, **characterized in that** more than one property is assigned to a section of a route, and a period of time is assigned to each property.

## Revendications

1. Procédé en vue du calcul d'un itinéraire dans un appareil de navigation,
un itinéraire de conduite étant déterminé depuis un lieu de départ ou actuel vers un lieu cible à l'aide d'informations concernant le trajet,
et sans prendre en compte un segment de trajet disposant d'au moins une propriété déterminée lors de la détermination de l'itinéraire de conduite, la propriété déterminée étant associée au segment de trajet par l'utilisateur,
**caractérisé en ce qu'**
une durée pendant laquelle la propriété pouvant être prédéfinie reste associée au segment de trajet, est associée à la propriété pouvant être prédéfinie.

2. Procédé selon la revendication 1,
**caractérisé en ce que**
plus d'une propriété est associée à un segment de trajet.

3. Procédé selon la revendication 1,
**caractérisé en ce que**
plus d'une propriété est associée à un segment de trajet et une durée est associée à chaque propriété.
